# EUROPÄISCHE PATENTSCHRIFT

(11) **EP 1 138 575 B1**
(45) Veröffentlichungstag und Bekanntmachung des Hinweises auf die Patenterteilung: **28.12.2005**
(21) Anmeldenummer: 01102818.0
(22) Anmeldetag: 12.02.2001
(51) Int. Cl.: B62D 1/10

(54) **Vorrichtung zur lösbaren Befestigung eines Lenkrades auf einer Lenkwelle**
Releasable attaching device of steering wheel on a steering column
Dispositif de fixation détachable d'un volant de direction sur une colonne de direction

(30) Priorität: 30.03.2000 DE 20005884 U
(43) Veröffentlichungstag der Anmeldung: 04.10.2001
(73) Patentinhaber: TRW Automotive Safety Systems GmbH, 63743 Aschaffenburg (DE)
(72) Erfinder: Kreuzer, Martin, 63839 Kleinwallstadt (DE)
(74) Vertreter: Kitzhofer, Thomas

(56) Entgegenhaltungen:
- DE-C- 4 106 096
- US-A- 2 448 278

## Beschreibung

Die Erfindung betrifft eine Vorrichtung zur lösbaren Befestigung eines Lenkrades auf einer Lenkwelle, wobei das Lenkrad eine mit einer senkrecht zur Achse der Lenkwelle angeordneten Durchgangsbohrung versehene Nabe aufweist und die Durchgangsbohrung eine in der Lenkwelle angeordnete Nut schneidet, mit einem in der Durchgangsbohrung angeordneten Befestigungsmittel, wobei das Befestigungsmittel eine Schraube mit einem Kopf und einem wenigstens teilweise mit einem Außengewinde versehenen Schaft und einer auf den Schaft der Schraube aufschraubbaren Mutter aufweist, wobei die Mutter in die Nut eingreifen kann.

Die Verwendung von mit Gassäcken versehenen Lenkrädern in Automobilen erfordert neue Techniken zur Montage des Lenkrades auf der Lenkwelle, da das Innere des Lenkrades nicht mehr von oben zugänglich ist.

Es ist z.B. aus der DE 41 06 096 im Zusammenkang mit einer Zapfenwelle eines Traktors bekannt, die Antriebswelle mit einer Nut zu versehen und die Nabe mit einer Durchgangsbohrung, die diese Nut schneidet, und in dieser Durchgangsbohrung ein aus einer Schraube und einer auf diese Schraube aufgeschraubten Mutter bestehendes Befestigungsmittel anzuordnen, wobei ein Teil der Schraube und/oder der Mutter beim Festziehen der Schrauben-Muttern-Verbindung in die Nut der Antriebswelle eingreift und auf diese Weise die Nabe und die Antriebswelle miteinander verklemmt. Wie auch bei der Verwendung von von oben auf eine Lenkwelle aufgeschraubten Muttern werden die beim Fahrbetrieb auftretenden Drehmomente über kraftschlüssige Kerbverzahnungen in der Welle und der Nabe übertragen.

Um das Lenkrad problemlos von der Lenkwelle trennen zu können, z.B. zum Wechseln des Lenkrads oder des Gassackmoduls, ist es erforderlich, daß sich die Schrauben-Muttern-Verbindung einfach und sicher lösen läßt.

Dies wird bei einer gattungsgemäßen Vorrichtung zur lösbaren Befestigung eines Lenkrades auf einer Lenkwelle dadurch erreicht, daß die Durchgangsbohrung zwei entgegengesetzt gerichtete radiale, zwischen dem Schraubenkopf und der Mutter angeordnete Abstützflächen aufweist, wobei die eine Abstützfläche schraubenkopfseitig und die andere Abstützfläche mutternseitig angeordnet ist, und daß ein Federelement vorgesehen ist, das an der Schraube oder an der Mutter angreift und eine eine Vergrößerung der Distanz zwischen Schraubenkopf und Mutter anstrebende Kraft auf die Schraube oder auf die Mutter ausübt. Das aus Schraube und Mutter bestehende Befestigungsmittel bildet eine Schrauben-Muttern-Verbindung. Beim Festziehen der Schrauben-Muttern-Verbindung wird das Federelement zusammengedrückt und vorgespannt. Beim Lösen der Schrauben-Muttern-Verbindung sorgt die in der Feder gespeicherte Energie dafür, daß Schraubenkopf und Mutter auseinandergedrückt werden und die Mutter den Eingriff mit der Nut verläßt, so daß das Lenkrad einfach von der Lenkwelle entfernt werden kann.

In einer bevorzugten Ausführungsform der Erfindung ist das Federelement zwischen der mutternseitigen Abstützfläche und der Mutter angeordnet. Auf diese Weise wird sichergestellt, daß sich die Mutter beim Lösen der Schrauben-Muttern-Verbindung nach außen zum mutternseitigen Ende der Durchgangsbohrung bewegt und nicht mehr in die Nut der Lenkwelle eingreift.

In einer weiteren bevorzugten Ausführungsform der Erfindung ist das Federelement zwischen der schraubenkopfseitigen Abstützfläche und dem Schraubenkopf angeordnet. Auf diese Weise läßt sich die Schraube nach dem Lösen der Schrauben-Muttern-Verbindung leicht entfernen.

Es ist notwendig, die Mutter gegen Drehung in der Durchgangsbohrung zu sichern, um ein Mitdrehen der Mutter mit der Schraube während der Festziehbewegung oder während des Lösens der Verbindung zu vermeiden.

Vorteilhafterweise ist das mutternseitige Ende der Durchgangsbohrung gegen ein Herausfallen der Mutter gesichert, z.B. durch Verstemmen.

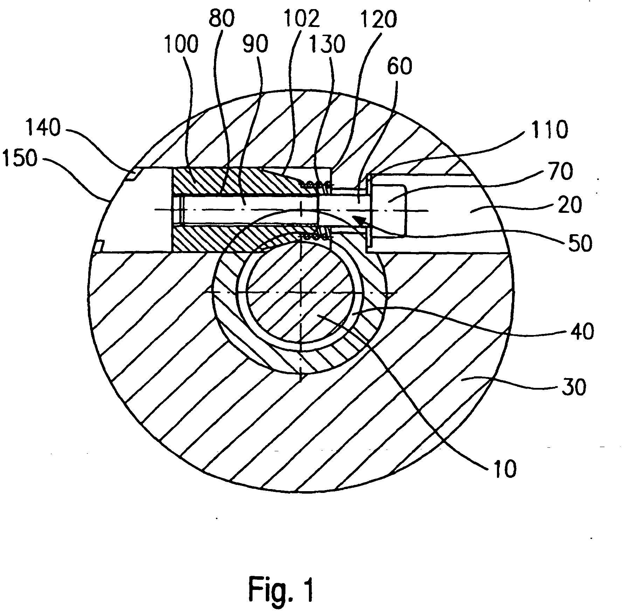

Weitere Merkmale und Vorteile der Erfindung gehen aus der nachfolgenden Beschreibung eines Ausführungsbeispiels in bezug auf die einzige Figur hervor.

Die Figur zeigt eine erfindungsgemäße Vorrichtung zur lösbaren Befestigung eines Lenkrades auf einer Lenkwelle 10, wobei das Lenkrad eine Nabe 30 aufweist, die mit einer Durchgangsbohrung 20 versehen ist. Diese Durchgangsbohrung 20 schneidet eine in der Lenkwelle ausgebildete Nut 40. In der Durchgangsbohrung 20 ist eine Verengung ausgebildet, die zwei radiale Abstützflächen 110 und 120 bildet.

Ein wesentliches Bestandteil der Vorrichtung ist ein Befestigungsmittel 50. Das Befestigungsmittel 50 weist eine Schraube 60 mit einem Schraubenkopf 70 sowie einem Schaft 90 auf, der wenigstens teilweise mit einem Außengewinde 80 versehen ist, und eine auf den Schaft 90 aufschraubbare Mutter 100 und ist so in der Durchgangsbohrung 20 angeordnet, daß der Schraubenkopf 70 und die Mutter 100 durch die radialen Abstützflächen 110 und 120 voneinander getrennt sind. Die Abstützfläche 110 ist dabei dem Schraubenkopf 70 zugewandt und die Abstützfläche 120 der Mutter 100. Die Mutter 100 ist mit einem Innengewinde versehen und weist an ihrem der mutternseitigen Abstützfläche 120 zugewandten Ende eine vorzugsweise konische Abschrägung 102 auf, die so ausgebildet ist, daß sie in die Nut 40 der Lenkwelle 10 eingreifen kann.

In der Durchgangsbohrung 20 ist eine Führung für die Mutter 100 vorgesehen, um diese gegen ein Verdrehen in der Durchgangsbohrung 20 zu sichern und ein Mitdrehen der Mutter mit der Schraubenbewegung während eines Schraubvorganges zu verhindern.

Zwischen der Mutter 100 und der mutternseitigen Abstützfläche 120 ist ein Federelement 130 angeordnet, vorzugsweise eine Spiralfeder. Zwischen der schraubenkopfseitigen Abstützfläche 110 und dem Schraubenkopf 70 kann eine Unterlegscheibe vorgesehen sein.

Um bei gelöster Schrauben-Muttern-Verbindung 50 ein Herausfallen der Mutter 100 aus der Durchgangsbohrung 20 zu verhindern, ist das mutternseitige Ende der Durchgangsbohrung 20 durch geeignete Mittel, z.B. durch Verstemmungen 140, gesichert.

Zur Verbindung des Lenkrades mit der Lenkwelle wird bei gelöster Schrauben-Muttern-Verbindung 50 das Lenkrad auf die Lenkwelle aufgesetzt. Nicht dargestellte Kerbverzahnungen in Nabe und Lenkwelle sorgen für eine Drehmomentübertragung zwischen dem Lenkrad und der Lenkwelle. Die Mutter 100 ist nur so weit auf den Schaft 90 aufgeschraubt, daß das Federelement 130 die Mutter 100 durch Federkraft in einer Position nahe der mutternseitigen Öffnung 150 der Durchgangsbohrung 20 hält, so daß die Mutter 100 das Aufsetzen des Lenkrads 30 auf die Lenkwelle 10 nicht behindert.

Nach dem Aufsetzen des Lenkrads auf die Lenkwelle greift deshalb zunächst die konische Abschrägung 102 der Mutter 100 nicht in die Nut 40 der Lenkwelle 10 ein. Durch ein Festziehen der Schrauben-Muttern-Verbindung durch Drehung des Schraubenkopfes 70 wird die Mutter 100 längs ihrer Führung in Richtung der Abstützfläche 120 bewegt und gerät dabei in Eingriff mit der Nut 40 und verklemmt über die konische Abschrägung 102 die Nabe 30 des Lenkrads mit der Lenkwelle 10. Die Abstützflächen 110 und 120 sorgen dafür, daß die Mutter eine definierte Position bezüglich der Nut 40 einnimmt. Nach dem Festziehen der Schrauben-Muttern-Verbindung 50 ist das Lenkrad an der Lenkwelle gesichert.

Das Federelement 130 wird durch die Bewegung der Mutter 100 in Richtung der Abstützfläche 120 zusammengedrückt und vorgespannt.

Zum Lösen der Verbindung zwischen der Nabe 30 des Lenkrads und der Lenkwelle 10 wird die Schrauben-Muttern-Verbindung 50 gelöst, wiederum durch das Drehen des Schraubenkopfes 70. Das Federelement 130 entspannt sich nach und nach und bewegt die Mutter 100 von der Abstützfläche 120 weg in Richtung der mutternseitigen Öffnung 150 bei nach wie vor an der Abstützfläche 110 anliegendem Schraubenkopf 70. Auf diese Weise wird der Eingriff der Mutter 100 mit der Nut 70 sicher gelöst, und das Lenkrad kann von der Lenkwelle abgehoben werden.

## Patentansprüche

1. Vorrichtung zur lösbaren Befestigung eines Lenkrades auf einer Lenkwelle, wobei das Lenkrad eine mit einer senkrecht zur Achse der Lenkwelle (10) angeordneten Durchgangsbohrung (20) versehene Nabe (30) aufweist und die Durchgangsbohrung (20) eine in der Lenkwelle (10) angeordnete Nut (40) schneidet, mit einem in der Durchgangsbohrung (20) angeordneten Befestigungsmittel (50), wobei das Befestigungmittel eine Schraube (60) mit einem Kopf (70) und einem wenigstens teilweise mit einem Außengewinde (80) versehenen Schaft (90) und eine auf den Schaft (90) der Schraube (60) aufschraubbare Mutter (100) aufweist, wobei die Mutter (100) in die Nut (40) eingreifen kann, **dadurch gekennzeichnet, daß** die Durchgangsbohrung (20) zwei entgegengesetzt gerichtete radiale, zwischen dem Schraubenkopf (70) und der Mutter (100) angeordnete Abstützflächen (110, 120) aufweist, wobei die eine Abstützfläche (110) schraubenkopfseitig und die andere Abstützfläche (120) mutternseitig angeordnet ist, und daß ein Federelement (130) vorgesehen ist, das an der Schraube (60) oder an der Mutter (100) angreift und eine eine Vergrößerung der Distanz zwischen Schraubenkopf und Mutter anstrebende Kraft auf die Schraube (60) oder auf die Mutter (100) ausübt.

2. Vorrichtung nach Anspruch 1, **dadurch gekennzeichnet, daß** das Federelement (130) zwischen der mutternseitigen Abstützfläche (120) und der Mutter (100) angeordnet ist und eine Kraft in Richtung vom Schraubenkopf (70) zur Mutter (100) auf die Mutter (100) ausübt.

3. Vorrichtung nach Anspruch 1, **dadurch gekennzeichnet, daß** das Federelement (130) zwischen der schraubenkopfseitigen Abstützfläche (110) und dem Schraubenkopf (70) angeordnet ist.

4. Vorrichtung nach einem der vorhergehenden Ansprüche, **dadurch gekennzeichnet, daß** die Mutter (100) gegen Drehung in der Durchgangsbohrung (20) gesichert ist.

5. Vorrichtung nach einem der vorhergehenden Ansprüche, **dadurch gekennzeichnet, daß** das mutternseitige Ende der Durchgangsbohrung (20) gegen ein Herausfallen der Mutter (100) gesichert ist.

6. Vorrichtung nach einem der vorhergehenden Ansprüche, **dadurch gekennzeichnet, daß** die Mutter (100) eine konische Abschrägung (102) aufweist, mit der sie in die Nut (40) eingreift.

## Claims

1. A device for the detachable fastening of a steering wheel on a steering shaft, the steering wheel having a hub (30) provided with a through-bore (20) arranged perpendicularly to the axis of the steering shaft (10), and the through-bore (20) intersecting a groove (40) arranged in the steering shaft (10), comprising a fastening means (50) arranged in the through-bore (20), the fastening means having a screw (60) with a head (70) and a shank (90) provided at least partially with an external thread (80) and having a nut (100) adapted to be screwed onto the shank (90) of the screw (60), the nut (100) being adapted to engage in the groove (40), **characterized in that** the through-bore (20) has two oppositely directed radial support surfaces (110, 120) arranged between the screw head (70) and the nut (100), one support surface (110) being arranged on the screw head side and the other support surface (120) being arranged on the nut side, and that a spring element (130) is provided, which engages the screw (60) or the nut (100) and exerts a force onto the screw (60) or onto the nut (100) with the aim to increase the distance between the screw head and the nut.

2. The device according to Claim 1, **characterized in that** the spring element (130) is arranged between the support surface (120) on the nut side and the nut (100) and exerts a force onto the nut (100) in the direction from the screw head (70) to the nut (100).

3. The device according to Claim 1, **characterized in that** the spring element (130) is arranged between the support surface (110) on the screw head side and the screw head (70).

4. The device according to any of the preceding claims, **characterized in that** the nut (100) is secured against rotation in the through-bore (20).

5. The device according to any of the preceding claims, **characterized in that** the end of the through-bore (20) on the nut side is secured against the nut (100) falling out.

6. The device according to any of the preceding claims, **characterized in that** the nut (100) has a conical chamfer (102) by which it engages in the groove (40).

## Revendications

1. Dispositif de fixation détachable d'un volant de direction sur un arbre de direction, le volant de direction présentant un moyeu (30) pourvu d'un alésage traversant (20) agencé perpendiculairement à l'axe de l'arbre de direction (10) et l'alésage traversant coupant une gorge (40) agencée dans l'arbre de direction (10), comportant un moyen de fixation (50) agencé dans l'alésage traversant (20), le moyen de fixation présentant une vis (60) avec une tête (70) et une tige (90) pourvue au moins partiellement d'un filetage (80), et un écrou (10) qui peut être vissé sur la tige (90) de la vis (60), l'écrou (100) pouvant s'engager dans la gorge (40), **caractérisé en ce que** l'alésage traversant (20) présentant deux surfaces d'appui (110, 120) radiales orientées à l'opposé l'une de l'autre et agencées entre la tête de vis (70) et l'écrou (100), ladite une surface d'appui (110) étant agencée côté tête de vis et l'autre surface d'appui (120) étant agencée côté écrou, et **en ce qu'**il est prévu un élément ressort (130) qui attaque la vis (60) ou l'écrou (100) et qui exerce une force sur la vis (60) ou sur l'écrou (100) tendant à agrandir la distance entre la tête de vis et l'écrou.

2. Dispositif selon la revendication 1, **caractérisé en ce que** l'élément ressort (130) est agencé entre la surface d'appui (120), côté écrou, et l'écrou (100) et exerce une force sur l'écrou (100) en direction depuis la tête de vis (70) vers l'écrou (100).

3. Dispositif selon la revendication 1, **caractérisé en ce que** l'élément ressort (130) est agencé entre la surface d'appui (110), côté tête de vis, et la tête de vis (70).

4. Dispositif selon l'une des revendications précédentes, **caractérisé en ce que** l'écrou (100) est assuré contre une rotation dans l'alésage traversant (20).

5. Dispositif selon l'une des revendications précédentes, **caractérisé en ce que** l'extrémité de l'alésage traversant (20), côté écrou, est assurée contre la chute de l'écrou (100).

6. Dispositif selon l'une des revendications précédentes, **caractérisé en ce que** l'écrou (100) présente un chanfrein (102) conique par lequel il s'engage dans la gorge (40).
